# EUROPÄISCHE PATENTSCHRIFT

(11) **EP 0 877 897 B1**
(45) Veröffentlichungstag und Bekanntmachung des Hinweises auf die Patenterteilung: **02.08.2000**
(21) Anmeldenummer: 96945865.2
(22) Anmeldetag: 07.11.1996
(51) Int. Cl.: F16T 1/00

(54) **VERFAHREN UND VORRICHTUNG ZUM ABLEITEN VON KONDENSAT AUS DRUCKGASSYSTEMEN**
METHOD AND DEVICE FOR DRAWING CONDENSATE OFF FROM COMPRESSED-GAS SYSTEMS
PROCEDE ET DISPOSITIF D'EVACUATION DE CONDENSAT DANS DES SYSTEMES DE GAZ COMPRIME

(30) Priorität: 30.01.1996 DE 19603202
(43) Veröffentlichungstag der Anmeldung: 18.11.1998
(73) Patentinhaber: Koch, Berthold, 41468 Neuss (DE)
(72) Erfinder: Koch, Berthold, 41468 Neuss (DE)
(74) Vertreter: Bauer, Wulf, Dr.
(86) Internationale Anmeldenummer: DE9602118
(87) Internationale Veröffentlichungsnummer: WO9728400

(56) Entgegenhaltungen:
- EP-A- 0 081 826
- EP-A- 0 391 250
- GB-A- 2 038 032
- GB-A- 2 074 702
- US-A- 5 337 779
- PATENT ABSTRACTS OF JAPAN vol. 018, no. 314 (M-1621), 15.Juni 1994 & JP 06 066399 A (MIYAWAKI:KK), 8.März 1994,

## Beschreibung

Die Erfindung bezieht sich auf ein Verfahren zum Ableiten von Kondensat aus Druckgassystemen, eine Anordnung hierfür sowie die Verwendung eines Kondensatableiters für ein Verfahren zum Ableiten von Kondensat aus Druckgassystemen.

Ein Verfahren zum Ableiten von Kondensat aus Druckgassystemen, wie beispielsweise Druckluft-, Dampf- oder anderen Systemen ist aus der EP 391 250 B1 bekannt. Aus ihr ist auch ein Kondensatableiter in einer speziellen Bauweise bekannt. Dieser Kondensatableiter bildet eine vorbekannte Anordnung zum Ableiten von Kondensat aus Druckgassystemen.

Weiterhin ist aus der GB-A-2 074 702 ein Verfahren und eine Vorrichtung zum Ableiten von Kondensat bekannt, die für Dampfanlagen ausgelegt ist. In einem T-förmigen Gehäuse ragt ein Sensor in eine Sammelkammer, in der sich Kondensat sammeln kann. Wenn der Sensor Kondensat erfaßt, wird eine Zeitverzögerungsschaltung aktiviert, die ein Auslaßventil erst eine bestimmte Zeit nach dieser Erfassung öffnet. Dadurch wird, ähnlich wie auch bei der JP-A-06 066 399, ein zu häufiges Öffnen und Schließen des Auslaßventils auch für kleinste Auslaßmengen verhindert.

Nach dem vorbekannten Stand der Technik wird aus dem Druckgassystem abfließendes Kondensat in einer Sammelkammer des Kondensatableiters gesammelt. In die Sammelkammer ragt mindestens ein Sensor, der den Pegel des Kondensats erfaßt, vorzugsweise sind zwei derartige Sensoren in unterschiedlicher Höhe vorgesehen. Wenn die Sammelkammer bis zur Höhe des oberen Sensors gefüllt ist, beginnt ein Ableitvorgang. Die im Kondensatableiter vorgesehene Steuerelektronik öffnet ein Magnetventil, wodurch der Druck in einer Steuerkammer eines Membranventils abgebaut wird. Dieses hebt sich dadurch von seinem Sitz ab und gibt den Weg für Kondensat zu einem Auslaß frei.

Nach dem Stand der Technik sollte das Volumen der Sammelkammer in einem gewissen, vernünftigen Verhältnis zu der zeitlich anfallenden Menge an Kondensat stehen. Das Volumen sollte so groß sein, daß nicht zu häufig die Ventilanordnung geöffnet werden muß. Ist die Sammelkammer zu klein bemessen, so findet eine Vielzahl von Ventilspielen statt. Ein Ventil, sei es ein Membranventil oder auch ein elektromagnetisches Ventil, hat mechanisch bewegte Teile, die einem Verschleiß unterliegen. Eine sichere Funktion des Ventils kann nur für eine gewisse Anzahl von Ventilspielen vorgegeben werden. Bei zu klein ausgebildetem Sammelraum ist diese Anzahl von Ventilspielen relativ rasch erreicht, beispielsweise schon in Wochen oder darunter.

Für Druckgassysteme mit hohem Anfall an Kondensat sind daher nach dem Stand der Technik große Kondensatableiter mit großem Sammelraum vorgesehen, abgestuft nach den Bedürfnissen gibt es eine Anzahl kleinerer Kondensatableiter.

Nun sind allerdings die größeren Kondensatableiter deutlich teurer als die kleineren und ist man aus Ersparnisgründen geneigt, einen möglichst kleinen Kondensatableiter einzusetzen. Dies führt aber wieder zu einer Einengung hinsichtlich der Lebensdauer der bewegten Teile.

Hier setzt null die Erfindung ein. Sie hat es sich zur Aufgabe gemacht, ein Verfahren zur Ableitung von Kondensat aus Druckgassystemen und eine Anordnung für ein derartiges Ableiten anzugeben, wobei eine relativ klein dimensionierte Ablaßvorrichtung eingesetzt werden kann. Dies führt zu einer andersartigen Verwendung bekannter Kondensatableiter als nach dem Stand der Technik.

Erfindungsgemäß wird die Aufgabe verfahrensmäßig gelöst durch ein Verfahren zum Ableiten von Kondensat aus Druckgassystemen, z. B. Druckluftsystemen, mit den Merkmalen des Anspruchs 1.

Vorrichtungsmäßig wird die Aufgabe gelöst durch eine Anordnung gemäß Anspruch 2.

Erfindungsgemäß erfolgt das Sammeln von Kondensat in einem Sammelraum, der selbst keine Einbauten einer Ablaßvorrichtung hat, also vorzugsweise insbesondere keine Sensoren aufweist. Es ist eine Ablaßvorrichtung vorgesehen, die selbst eine eigene Sammelkammer aufweist. Diese Ablaßvorrichtung kann z. B. ein Kondensatableiter sein, wie er aus der EP 391 250 B1 bekannt ist, kann aber auch wesentlich einfacher aufgebaut sein, nämlich beispielsweise nur rohrförmig ausgeführt sein. In der Ablaßvorrichtung befindet sich der mindestens eine Sensor, wobei ein Sensor für das erfindungsgemäße Verfahren ausreicht.

Entscheidend ist nun die Steuerung der Ablaßvorrichtung. Da über die Ablaßvorrichtung der separate Sammelraum entleert wird, der relativ groß ausgebildet werden kann, kann die Ventilanordnung der Ablaßvorrichtung relativ lange Zeitspannen geöffnet bleiben und können damit große Mengen an Kondensat abgeleitet werden, ohne daß es vieler Ventilspiele bedarf.

Die Ventilanordnung der Ablaßvorrichtung wird geöffnet, wenn eine von einer Zeitverzögerungsschaltung vorgegebene Zeitspanne abgelaufen ist. Die Zeitverzögerungsschaltung wird gestartet, wenn das Signal des Sensors vom Zustand "kein Kondensat" in den Zustand "Kondensat nachweisbar" übergeht. Geschlossen wird die Ventilanordnung wieder dann, wenn der Sensor vom Zustand "Kondensat nachweisbar" in den Zustand "kein Kondensat" übergeht.

Dieses Verfahren läßt sich wie folgt beschreiben: Im Sammelraum, der vorzugsweise, aber nicht notwendigerweise, Bestandteil des Druckgassystems ist, sammelt sich beim Betrieb Kondensat an. Sobald der Sensor vom Zustand "kein Kondensat" in den Zustand "Kondensat nachweisbar" übergeht, wird ein Zeittor geöffnet, innerhalb der von diesem Zeittor vorgegebenen Zeitspanne kann sich Kondensat im Sammelraum ansammeln. Die Länge dieses Zeittors ist die sogenannte Zeitspanne. Die Zeitspanne wird so bemessen, daß sich ausreichend, - für die Betriebssicherheit des Druckgassystems - aber nicht zuviel Kondensat im Sammelraum ansammeln kann. Wenn die Zeitspanne abgelaufen und damit das Zeittor geschlossen ist, wird die Ventilanordnung geöffnet. Es kann nun das innerhalb der Zeitspanne angesammelte Kondensat abfließen. Ist es abgeflossen, geht der Sensor vom Zustand "Kondensat nachweisbar" in den Zustand "kein Kondensat" über, dies führt zum Schließen der Ventilanordnung.

Insgesamt wird dadurch eine Vielzahl von Ventilspielen, wie sie beim Stand der Technik nötig sind, eingespart bzw. wird eine relativ kleine Ablaßvorrichtung, die einerseits einfacher und kostengünstiger baut als die vorbekannten Kondensatableiter und andererseits auch wesentlich kleiner als diese bemessen sein kann, eingesetzt. Für den Hersteller von Druckgassystemen, beispielsweise Druckluftsystemen, ergibt sich die Möglichkeit, daß an einer geeigneten Stelle des Systems der Sammelraum vorgesehen werden kann. Konstruktiv und aufwendungsmäßig ist dies einfacher als eine separate Sammelkammer ausreichenden Volumens in einem Kondensatableiter vorzusehen. Der Sammelraum kann aber auch ein separater, relativ einfach auszubildender Behälter sein, der einfach in geeigneter Weise an das Druckgassystem angeschlossen ist. An diesem ist dann wiederum separat die Ablaßvorrichtung angeordnet.

Die Zeitspanne, während der Kondensat angesammelt wird, kann einstellbar gemacht werden. So kann die Steuerelektronik, wenn sie die Zeitdauer zumindest des letzten Ableitvorgangs speichert und auswertet, sich an die jeweiligen Betriebsbedingungen anpassen. Beispielsweise kann die Steuerelektronik auch mit dem elektrischen Teil des Druckgassystems so verbunden sein, daß die Steuerelektronik über den Einschaltzustand und den Ausschaltzustand des Druckgassystems informiert wird, gegebenenfalls auch über unterschiedliche Betriebszustände. Auf diese Weise kann die Zeitspanne angepaßt werden, beispielsweise unterbrochen werden, wenn und solange das Druckgassystem bzw. der zugehörige Verdichter abgeschaltet ist.

Für das erfindungsgemäße Verfahren eignen sich insbesondere die vorbekannten Kondensatableiter. Diese haben eine eigene Sammelkammer, diese kann volumenmäßig deutlich kleiner, beispielsweise mindestens 10 mal, vorzugsweise 100 mal kleiner sein als das Volumen des Sammelraums. Dadurch kann mit relativ kleinen Kondensatableitern ein relativ großer KonclensaLfluß gesteuert werden, ohne zu viele Ventilspiele in Kauf nehmen zu müssen. Für das erfindungsgemäße Verfahren müssen die vorbekannten Kondensatableiter mit einer Zeitverzögerungsschaltung ausgerüstet sein und muß die Schaltelektronik so ausgebildet sein, daß erst nach Ablauf der Zeitspanne des Zeittores die Ventilanordnung öffnet.

Die Erfindung betrifft somit ein neues Konzept für das Ableiten von Kondensat aus Druckgassystemen und bezieht sich nicht mehr auf komplette, die gesamte Kondensatableitung durchführende Kondensatableiter - auch wenn sie derartige Vorrichtungen verwenden kann - sondern bringt eine kombinierte Lösung, die es dem Hersteller von Druckgassystemen ermöglicht, einen Sammelraum für Kondensat im Druckgassystern selbst, gegebenenfalls aber auch in Form eines separaten Behälters, vorzusehen und die Kosten für die Vorkehrung zum Ableiten von Kondensat insgesamt deutlich zu verringern.

Weitere Vorteile und Merkmale ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
FIG. 1 eine Anordnung zum Kondensatableiten mit einem schnittbildlich dargestellten Sammelraum und einer Ablaßvorrichtung, die an einen Auslaß anschließt, der sich an der tiefsten Stelle des Sammelraums befindet,
FIG. 2 eine Darstellung ähnlich FIG. 1, jedoch nun mit einem Auslaß, der sich an einer etwas höheren Stelle innerhalb des Sammelraums befindet,
FIG. 3 eine Darstellung entsprechend FIG. 1, wobei als Ablaßvorrichtung nunmehr ein ansich bekannter Kondensatableiter benutzt wird, der im wesentlichen schnittbildlich dargestellt ist, und
FIG. 4 eine Darstellung des Pegelstandes p innerhalb des Sammelraums aufgetragen über der Zeit t.

Die Figuren zeigen jeweils einen Sammelraum 20 eines hier nicht näher dargestellten, da bekannten Druckgassystems, der Sammelraum wird durch einen dichten Behälter gebildet, der ein geeignetes Volumen aufweist und in seinem oberen Bereich in ansich bekannter Weise mit dem eigentlichen Druckgassystem 21 verbunden ist. Der Sammelraum 20 hat unten einen Auslaß 22, der sich an seiner tiefsten Stelle befindet. Im Sammelraum 20 befindet sich Kondensat, der Spiegel des Kondensats hat den Pegelstand p.

Der Auslaß 22 ist über eine geeignete Rohrverbindung mit einer Ablaßvorrichtung 24 verbunden. Diese hat ein einfaches, beispielsweise rohrförmiges Gehäuse, in das ein Sensor 26 hineinragt. Er ist mit einer Steuerelektronik 28 verbunden, die sich vorzugweise in einem separaten Teilgehäuse und in der dargestellten Ausführung oberhalb des hier im Ausführungsbeispiel rohrförmigen Gehäuses befindet. Zu dieser Steuerelektronik 28 gehört eine Zeitverzögerungsschaltung 30. Schließlich ist eine Ventilanordnung bestehend aus einem Hauptventil 32 und einem elektromagnetisch betätigten Steuerventil 34 vorgesehen, das Steuerventil 34 ist mit der Steuerelektronik 28 verbunden. Das Hauptventil 32, das bevorzugt als Membranventil ausgeführt ist, sperrt entweder die Auslaßvorrichtung, sodaß durch sie kein Kondensat entweichen kann, oder gibt sie frei, so daß Kondensat im Sinne des Pfeiles 36 auslaufen kann.

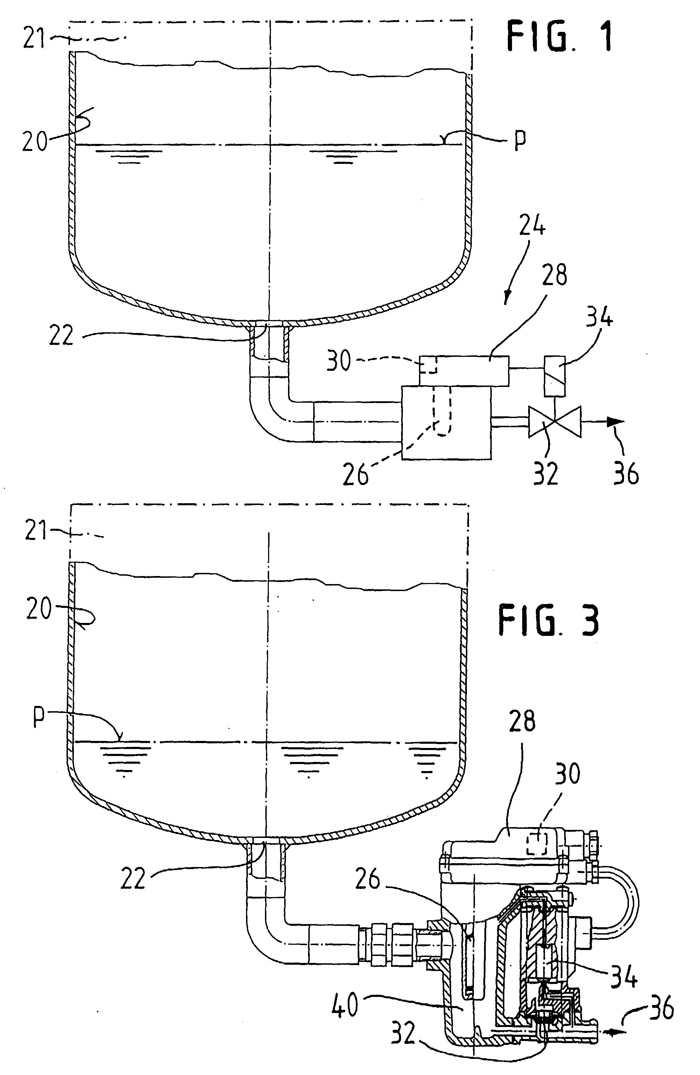

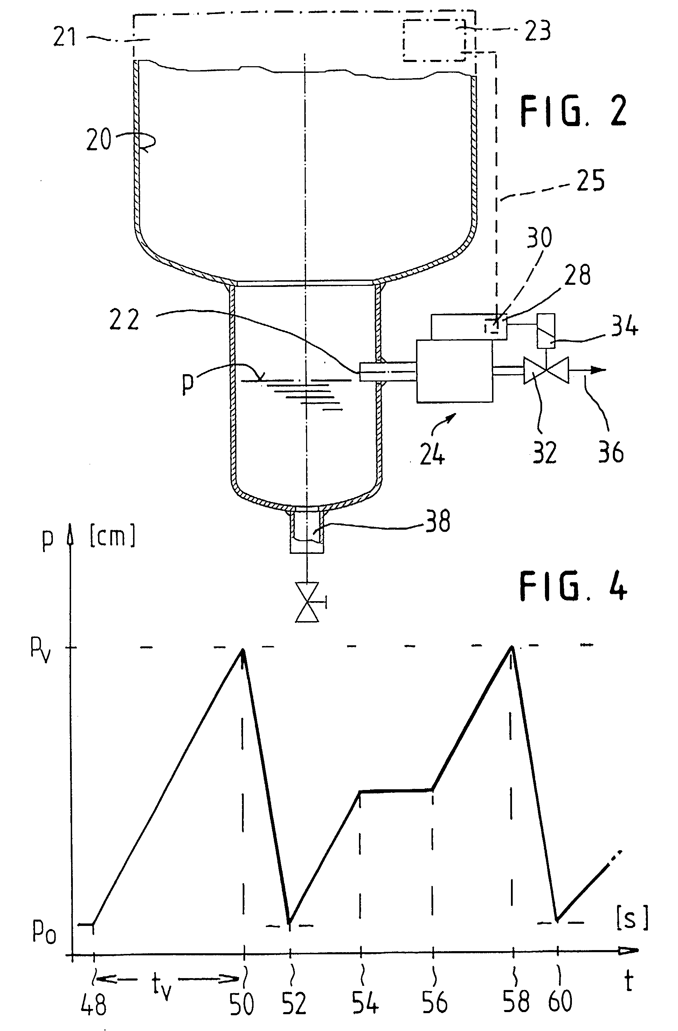

Das Ausführungsbeispiel nach FIG. 2 stellt eine Alternative zur Ausführung gem. FIG. 1 dar. Der Auslaß 22 ist nicht mehr an der tiefsten Stelle des Sammelraums 20, sondern in einer gewissen Höhe, oberhalb der tiefsten Stelle vorgesehen. An der tiefsten Stelle befindet sich ein Hilfsauslaß 38. Durch die Ablaßvorrichtung 24 kann der Sammelraum 20 nicht mehr vollständig entleert werden, vielmehr verbleibt unterhalb des Niveaus des Auslasses 22 Kondensat. In diesem Bereich können größere Schmutzpartikel sedimentieren und von dort regelmäßig oder unregelmäßig über den Hilfsauslaß 38 abgeleitet werden. Dadurch können größere Partikel, die die Ventilfunktion der automatische arbeitenden Ablaßvorrichtung 24 stören könnten, nicht in diese gelangen.

Das Druckgassystem 21 hat eine elektrische Steuerung 23. Diese ist über eine Leitung 25 mit der Steuerelektronik 28 verbunden. Auf diese Weise erhält die Steuerelektronik 28 über den Zustand des Druckgassystems 21 Informationen. So kann der Ablauf der Zeitverzögerungsschaltung 30 angehalten werden, wenn und solange das Druckgassystem abgeschaltet ist. Weiterhin kann die Steuerelektronik 28 über den Leistungszustand des Druckgassystems 21 Informationen erhalten. Bei hoher Leistung fällt mehr Kondensat an und ist daher die Zeitspanne der Zeitverzögerungsschaltung 30 zu verkürzen, bei geringer Leistung kann sie dagegen verlängert werden. Schließlich ist es vorteilhaft, der Steuerelektronik 28 weitere Parameter, beispielsweise bei einem Druckgassystem die Temperatur der angesaugten Außenluft mitzuteilen, weil in Abhängigkeit von der Temperatur unterschiedliche Mengen an Kondensat anfallen und über die Temperatur die Zeitspanne der Zeitverzögerungsschaltung 30 entsprechend variiert werden kann.

Das Ausführungsbeispiel gem. FIG. 3 entspricht im wesentlichen der bereits zu FIG. 1 besprochenen Ausführung, es wird jedoch nun anstelle einer relativ einfachen Ablaßvorrichtung ein Fertigbauteil benutzt, wie es bereits aus dem Stand der Technik bekannt ist, nämlich ein Kondensatableiter, wie er beispielsweise aus der EP 391 250 bekannt ist oder wie er von der Firma BEKO Kondensat-Technik GmbH, Neuss, hergestellt und angeboten wird. Da derartige Kondensatableiter bereits zum Stand der Technik gehören, ist es unnötig, sie im einzelnen zu beschreiben. Es wird daher lediglich auf die Unterschiede eingegangen, die zum Verständnis der Erfindung notwendig sind, einschließlich der Abänderungen, die am vorbekannten Kondensatableiter vorgenommen werden müssen.

Der vorbekannte Kondensatableiter, der hier dieselbe Bezugsziffer wie die Ablaßvorrichtung 24 erhalten hat, hat eine eigene Sammelkammer 40, die im Volumen deutlich kleiner ist als das Volumen des Sammelraums 20. Dies ergibt sich unmittelbar aus FIG. 3, auch wenn der Sammelraum 20 nach oben unbegrenzt dargestellt ist. Die Sammelkammer 40 wird für die erfindungsgemäße Verwendung nicht als Sammelraum benutzt, vielmehr nur als Raum, in den der Sensor 26 hineinragt. In FIG. 3 ist das elektromagnetische Steuerventil 34 im einzelnen dargestellt, weiterhin das mit einer Membran versehene Hauptventil 32. Oberhalb der Membran befindet sich eine Steuerkammer, die über einen Einlaßkanal ständig mit dem oberen Bereich der Sammelkammer 40, in dem sich im praktischen Betrieb Druckluft und kein Kondensat ansammeln kann, kommuniziert. Das Steuerventil 34 befindet sich in einem Auslaßkanal, durch den die Steuerkammer mit dem Austritt für Kondensat (Pfeil 36) verbindbar ist.

Die Steuerelektronik 28 ist in einem separaten Raum im oberen Bereich der Ablaßvorrichtung 24 untergebracht. Sie ist ergänzt durch eine Zeitverzögerungsschaltung 30. Diese wird gestartet, wenn der Spiegel an Kondensat in der Sammelkammer 40 soweit ansteigt, daß der Sensor 26 vom Zustand "kein Kondensat" übergeht in den Zustand "Kondensat nachweisbar". Für die Zeitdauer der von der Zeitverzögerungsschaltung 30 vorgegebenen Zeitspanne (auch Zeittor genannt) kann sich im Sammelraum 20 Kondensat ansammeln, damit sammelt sich ebenfalls Kondensat in der Sammelkammer 40 an. Oberhalb des Niveaus des Einlasses in die Sammelkammer 40 bleibt Druckluft in der Sammelkammer 40. In diesem Bereich endet auch der Einlaßkanal.

In einer bevorzugten Ausführung kann die Dauer des Zeittores innerhalb gewisser Grenzen eingestellt werden, hierzu ist vorzugsweise ein Potentiometer oder dergleichen vorgesehen.

Ist die Zeitspanne abgelaufen, wird die Ventilanordnung 32, 34 geöffnet und kann so lange Kondensat ablaufen, bis der Sensor 26 wieder vom Zustand "Kondensat nachweisbar" in den Zustand "kein Kondensat" übergeht. Bei dieser Sensoranzeige wird die Ventilanordnung 34, 36 wieder geschlossen.

Es ist möglich, das Sensorsignal nicht unmittelbar zur Steuerung der Ventilanordnung 34, 36 zu verwenden, sondern nur mittelbar, beispielsweise unter Zwischenschaltung einer weiteren Zeitverzögerungsschaltung.

Anhand des in FIG. 4 wiedergegebenen Diagramms soll nun die Arbeitsweise der Ausführungsbeispiele nach den Figuren 1 bis 3 erläutert werden: Zum Zeitpunkt 48 ist die Ventilanordnung 32, 34 geschlossen, es wird Kondensat vom Druckgassystem 21 abgegeben und sammelt sich im Sammelraum 20. Dadurch steigt dessen Pegel vom Wert Pₒ langsam bis Pᵥ an. Nach Ablauf der Zeitspanne tᵥ und zum Zeitpunkt 50 ist die Zeitverzögerungsschaltung 30 abgelaufen, im Sammelraum 20 liegt der Pegel Pᵥ vor. Es wird nun abgelassen, die Ventilanordnung 32, 34 ist bis zum Zeitpunkt 52 geöffnet. An diesem Zeitpunkt, hat der Pegel im Sammelraum 20 wieder den Wert P0 erreicht und ist der Sensor 26 vom Zustand "Kondensat nachweisbar" wieder in den Zustand "kein Kondensat" übergegangen. In FIG. 4 entspricht ein Pegel P0 und darunter dem Signal "kein Kondensat". Ein Pegel oberhalb P0 entspricht dagegen dem Signal "Kondensat nachweisbar".

Die Ventilanordnung 32, 34 ist ab dem Zeitpunkt 52 wieder geschlossen, es kann sich wieder Kondensat ansammeln. Der Spiegel des Kondensats im Sammelraum 20 steigt wieder an, bis zum Zeitpunkt 54. An diesem Zeitpunkt, bzw. etwas zuvor ist das Druckgassystem 21 ausgeschaltet worden. Es fällt nun kein Kondensat mehr an, der Pegel des Kondensates bleibt bis zum Zeitpunkt 56 im wesentlichen konstant. An diesem Zeitpunkt 56 fällt wieder neues Kondensat an weil das Druckgassystem 21 wieder in Betrieb gesetzt wurde. Während der Auszeit, also zwischen den Zeitpunkten 54 und 56, wurde der Ablauf der Zeitverzögerungsschaltung 30 unterbrochen. Zum Zeitpunkt 58 ist die Zeitspanne der Zeitverzögerungsschaltung 30 wieder erreicht, es beginnt wieder ein Ablaßvorgang. Es versteht sich, daß die Summe der Zwischenräume zwischen den beiden Zeitspannen 52 und 54 sowie 56 und 58 der Zeitdauer t zwischen den Zeitpunkten 48 und 50 entspricht. Vom Zeitpunkt 58 bis zum Zeitpunkt 60 findet wieder ein Ableiten statt, entsprechend der Zeitspanne 50 bis 52.

## Patentansprüche

1. Verfahren zum Ableiten von Kondensat aus Druckgassystemen, z. B. Druckluftsystemen, bei dem
1) ein Sammelraum (20) für Kondensat vorgesehen ist, in dem sich beim Betrieb des Druckgassystems Kondensat ansammeln kann, dieser Sammelraum (20) hat a) einen Auslaß (22), an dem angesammeltes Kondensat entnommen werden kann und b) ein Sammelraumvolumen, und
2) eine Ablaßvorrichtung (24) vorgesehen ist, die a) eine Sammelkammer (40) hat, die mit dem Auslaß (22) in Verbindung ist und die ein Sammelkammervolumen aufweist, welches deutlich kleiner, insbesondere mindestens zehnmal kleiner, als das Sammelraumvolumen ist, b) mindestens einen Sensor (26) hat, mit dem in der Sammelkammer befindliches Kondensat nachweisbar ist, c) eine mit dem Sensor (26) verbundene Steuerelektronik (28) aufweist, zu der eine Zeitverzögerungsschaltung (30) gehört und d) eine von dieser Steuerelektronik (28) gesteuerte Ventilanordnung (32,34) aufweist, die beeinflußt durch den Sensor (26) entweder die Ablaßvorrichtung (24) sperrt, so dass kein Kondensat durch sie entweichen kann, oder sie freigibt und immer dann, wenn der Kondensatspiegel ansteigt und der Sensor (26) ausgehend von dem Zustand "kein Kondensat" nunmehr den Zustand "Kondensat nachweisbar" anzeigt, die Zeitverzögerungsschaltung (30) gestartet und nach Ablauf einer von dieser vorgegebenen Zeitspanne die Ventilanordnung solange geöffnet wird, bis über den Sensor (26) wieder der Zustand "kein Kondensat" nachweisbar ist und die Ventilanordnung die Ablaßvorrichtung (24) wieder schließt.

2. Anordnung zum Ableiten von Kondensat aus Druckgassystemen, z. B. Druckluftsystemen,
- die einerseits einen Sammelraum (20) für Kondensat aufweist, in dem sich beim Betrieb des Druckluftsystems Kondensat ansammeln kann, der einen Auslaß (22) hat, an dem angesammeltes Kondensat entnommen werden kann und der ein Sammelraumvolumen hat, und
- die andererseits eine Ablaßvorrichtung (24) aufweist, die a) eine Sammelkammer (40) hat, welche mit dem Auslaß (22) verbunden ist und ein Sammelkammervolumen aufweist, das deutlich kleiner, insbesondere mindestens zehnmal kleiner, als das Sammelraumvolumen ist, b) einen Sensor (26) hat, mit dem in ihr befindliches Kondensat in den Positionen "kein Kondensat" und "Kondensat nachweisbar" erfaßbar ist, c) eine mit dem Sensor (26) verbundene Steuerelektronik (28) hat, die eine Zeitverzögerungsschaltung (30) aufweist, und d) eine von dieser Steuerelektronik (28) gesteuerte Ventilanordnung (32,34) hat, die beeinflußt durch das Signal des Sensors (26) entweder die Ablaßvorrichtung (24) sperrt, so dass kein Kondensat durch sie ablaufen kann, oder freigibt und der Sensor (26) so mit der Zeitverzögerungsschaltung (30) verbunden ist, dass bei einem Übergang vom Zustand "kein Kondensat" zum Zustand "Kondensat nachweisbar" die Zeitverzögerungsschaltung (30) gestartet wird und nach Ablauf einer von dieser vorgegebenen Zeitspanne die Steuerelektronik (28) ein Steuersignal an die Ventilanordnung abgibt, so dass diese geöffnet wird und die Steuerelektronik (28) andererseits ein Signal an die Ventilanordnung abgibt, das ein Schließen der Ventilanordnung bewirkt, wenn der Sensor (26) wieder vom Zustand "Kondensat nachweisbar" in den Zustand "kein Kondensat" übergeht.

3. Vorrichtung nach Anspruch 2, dadurch gekennzeichnet, dass der Sammelraum (20) Bestandteil des Druckgassystems ist.

4. Vorrichtung nach Anspruch 2, dadurch gekennzeichnet, dass der Sammelraum (20) von einem separaten Behälter gebildet ist, der mit dem Druckgassystem an einer Stelle, an der Kondensat anfällt, verbunden ist.

5. Vorrichtung nach Anspruch 2, dadurch gekennzeichnet, dass sich die Ablaßvorrichtung (24) außerhalb des Sammelraums (20) befindet.

6. Vorrichtung nach Anspruch 2, dadurch gekennzeichnet, dass das Sammelraumvolumen mindestens einhundertmal so groß ist wie das Sammelkammervolumen.

7. Vorrichtung nach Anspruch 2, dadurch gekennzeichnet, dass die Steuerelektronik (28) einen Speicher aufweist, in dem zumindest die Zeitdauer der letzten Öffnung der Ventilanordnung abgespeichert ist, dass diese Zeitdauer ausgewertet und die vorgegebene Zeitspanne entsprechend angepaßt wird.

8. Verwendung eines Kondensatableiters für Druckgassysteme, z. B. Druckluftsysteme, mit einem Gehäuse, das eine an das Druckgassystem anschließbare Sammelkammer (40) für Kondensat hat, die ein Sammelkammervolumen hat, und das einen Auslaßkanal aufweist, mit einer diesem Auslaßkanal zugeordneten Ventilanordnung (32,34) bestehend aus einem Membranventil und einem dieses steuernden Magnetventil und mit einer elektronischen Steuerschaltung, die mindestens einen Sensor (26) aufweist, der in die Sammelkammer (40) hineinragt und das dort angesammelte Kondensat in den Zuständen "kein Kondensat" und "Kondensat nachweisbar" erfaßt, für eine Anordnung zum Ableiten von Kondensat aus einem Druckgassystem, das einen Sammelraum (20) für Kondensat aufweist, in dem sich beim Betrieb Kondensat ansammeln kann, wobei dieser Sammelraum einen Auslaß (22) hat, an dem angesammeltes Kondensat entnommen werden kann und ein Sammelraumvolumen hat, das deutlich größer, insbesondere mindestens zehnmal größer als das Sammelkammervolumen ist und wobei die elektronische Steuerschaltung eine Zeitverzögerungsschaltung (30) aufweist, die gestartet wird, wenn das Sensorsignal vom Zustand "kein Kondensat" in den Zustand "Kondensat nachweisbar" übergeht und die Ventilanordnung nach Ablauf der von dieser Zeitverzögerungsschaltung (30) vorgegebenen Zeitspanne in den Durchlaßzustand schaltet, und die Ventilanordnung wieder in den Sperrzustand schaltet, wenn das Signal am Sensor (26) vom Zustand "Kondensat nachweisbar" in den Zustand "kein Kondensat" übergeht.

## Claims

1. A method for draining condensate off from compressed-gas systems as for example a compressed air system, with which
1) a trap (20) for condensate is provided, in which condensate collects during operation of the compressed-gas system, this trap (20) has a) an outlet (22) through which the condensate which collects can be drawn off and b) a trap volume and
2) a purging device (24) is connected to the outlet (22) and which has a) a collection chamber (40), which is connected to the outlet (22) and which provides for a collection chamber volume, that is noticeably smaller, especially at least ten times smaller, than the trap volume, b) at least one sensor (26) intended to detect the presence of condensate in the collection chamber, c) which comprises control electronics (28) connected to the sensor (26) including a timer circuit (30) and d) which comprises a valve arrangement (32, 34) controlled by the control electronics (28) and which, influenced by the sensor (26), either shuts the purging device (24) so that no condensate can escape through it or opens it and each time the condensate level rises and the sensor (26) changes over from indicating "no condensate", to indicating "condensate present", the timer circuit (30) is started, and on expiry of the time defined by the timer circuit, the valve is opened until the sensor (26) indicates ,,no condensate" again, when the valve closes the purging device (24) again.

2. An arrangement for draining condensate off from compressed-gas systems for example compressed air systems,
- which on one hand comprises a trap (20) for condensate, in which condensate may collect during the operation of the compressed-air system and which has an outlet (22), at which the collected condensate may be taken and which has a trap volume, and
- which one the other hand comprises a purging device (24), which a) has a collection chamber (40), which is connected to the outlet (22) and which provides for a collection chamber volume that is noticeably smaller, especially at least ten times smaller, than the trap volume, b) has a sensor (26) with which condensate collected in it can be registered in the positions "no condensate" and "condensate present", c) which has a control electronics (28) which are connected with the sensor (26) and which comprises a timer circuit (30), and d) which has a valve arrangement (32, 34) controlled by these control electronics (28), which influenced by the signal of the sensor (26) either blocks the purging device (24) in such a way that no condensate can flow through it or releases it and the sensor (26) is thereby connected with the timer circuit (30) in such a way that the timer circuit (30) is started when it switches from indicating "no condensate" to indicating "condensate present" and after one of the dictated time span has passed, the control electronics (28) send a control signal to the valve arrangement in such a way that the same is opened and the control electronics (28) on the other hand send a signal to the valve arrangement in such a way that it effects a closing of the valve arrangement if the sensor (26) switches again from indicating "condensate present" to indicating "no condensate".

3. The arrangement according to claim 2 characterized by the fact that the trap (20) is part of the compressed-gas system.

4. The arrangement according to claim 2 characterized by the fact that the trap (20) is formed by a separate receptacle, which is connected with the compressed-gas system at a point where condensate occurs.

5. The arrangement according to claim 2 characterized by the fact that the purging device (24) is positioned outside the trap (20).

6. The arrangement according to claim 2 characterized by the fact that the trap volume is at least a hundred times bigger than the collection chamber volume.

7. The arrangement according to claim 2 characterized by the fact that the control electronics (28) comprise a storage, in which at least the last time span of the last opening of the valve arrangement is stored and that the time defined is modified accordingly.

8. A Usage of a device for draining off condensate for compressed-gas systems for example compressed-air systems with a housing which comprises a collection chamber (40) for condensate having a collection chamber volume, which can be connected to the compressed-gas system, and a drain, with a valve arrangement (23, 34) allocated to it, consisting of a diaphragm valve and a solenoid valve controlling the same and with a control electronics (28), which comprises at least one sensor (26), which projects into the collection chamber (40) and which registers the condensate collected therein indicating from "no condensate" to "condensate present" for an arrangement for draining condensate off from a compressed-gas system, which has a trap (20) for condensate, in which condensate collects during operation, whereby this trap has an outlet (22) through which the condensate collected can be drained off and has a trap volume, which is noticeably bigger, preferably at least ten times bigger than the collection chamber volume, and whereby the control electronics (28) comprises a timer circuit (30), which is started, when the sensor signal changes from indicating "no condensate" to indicating "condensate present" and the valve arrangement (23, 34) switches into the open state after the time span dictated by the timer circuit (30) has passed, and that the valve arrangement (23, 34) is switched back into the blocked state, when the signal at the sensor (26) switches from indicating "condensate present" to indicating "no condensate".

## Revendications

1. Procédé pour évacuer le condensat de systèmes de gaz comprimé, comme par exemple de systèmes d'air comprimé, dans lequel est prévu 1) une chambre collectrice (20) pour le condensat dans laquelle le condensat peut s'accumuler pendant le fonctionnement du système de gaz comprimé, cette chambre collectrice (20) ayant a) une sortie (22) par laquelle le condensat accumulé peut être prélevé et b) un volume de chambre collectrice et 2) un dispositif de vidange (24) ayant a) un compartiment collecteur (40) relié à la sortie (22) et pourvu d'un volume du compartiment collecteur nettement plus petit, au moins dix fois plus petit en particulier, que le volume de la chambre collectrice, ayant b) au moins un capteur (26) permettant de détecter le condensat se trouvant dans le compartiment collecteur, étant pourvu c) d'une électronique de commande (28) qui est connectée au capteur (26) et à laquelle est associée un temporisateur (30) et étant pourvu d) d'un agencement de soupapes (32, 34) commandé par ladite électronique de commande (28) qui, sous l'influence du capteur (26), soit verrouille le dispositif de vidange (24) de sorte qu'il ne puisse plus laisser sortir le condensat soit l'ouvre, et chaque fois que le niveau de condensat monte et que le capteur (26) passe de l'indication "pas de condensat" à l'indication "condensat détecté", le temporisateur (30) est mis en marche et, une fois que l'intervalle de temps imposé par ce dernier est écoulé, l'agencement de soupapes est ouvert jusqu'à ce que le capteur (26) indique à nouveau "pas de condensat" et que l'agencement de soupapes referme le dispositif de vidange (24).

2. Agencement pour évacuer le condensat de systèmes de gaz comprimé, comme par exemple de systèmes d'air comprimé,
- qui est pourvu d'une part d'une chambre collectrice (20) pour le condensat dans laquelle le condensat peut s'accumuler pendant le fonctionnement du système de gaz comprimé et ayant une sortie (22) par laquelle le condensat accumulé peut être prélevé ainsi qu'un volume de chambre collectrice, et
- qui est pourvu d'autre part d'un dispositif de vidange (24) ayant a) un compartiment collecteur (40) relié à la sortie (22) et pourvu d'un volume du compartiment collecteur nettement plus petit, au moins dix fois plus petit en particulier, que le volume de la chambre collectrice, ayant b) un capteur (26) permettant d'enregistrer le condensat qui s'y trouve en indiquant les positions "pas de condensat" et "condensat détecté", c) d'une électronique de commande (28) qui est connectée au capteur (26) et à laquelle est associée un temporisateur (30) et étant pourvu d) d'un agencement de soupapes (32, 34) commandé par ladite électronique de commande (28) et qui, sous l'influence du signal émis par le capteur (26), soit verrouille le dispositif de vidange (24) de sorte qu'il ne puisse plus laisser sortir le condensat soit l'ouvre et que le capteur (26) est relié au temporisateur (30) de telle sorte que, lors du passage de l'état "pas de condensat" à l'état "condensat détecté", le temporisateur (30) est mis en marche et, une fois que l'intervalle de temps imposé par ce dernier est écoulé, l'électronique de commande (28) transfère un signal de commande à l'agencement de soupapes qui est alors ouvert et l'électronique de commande (28) transfère d'autre part un signal à l'agencement de soupapes qui provoque la fermeture de l'agencement de soupapes quand le capteur (26) passe de nouveau de l'état "condensat détecté" à l'état "pas de condensat".

3. Dispositif selon la revendication 2, caractérisé en ce que la chambre collectrice (20) est une partie constitutive du système de gaz comprimé.

4. Dispositif selon la revendication 2, caractérisé en ce que la chambre collectrice (20) est constituée par un contenant à part qui est relié au système de gaz comprimé à un endroit où du condensat se forme.

5. Dispositif selon la revendication 2, caractérisé en ce que le dispositif de vidange (24) se situe en dehors de la chambre collectrice (20).

6. Dispositif selon la revendication 2, caractérisé en ce que le volume de la chambre collectrice est au moins cent fois supérieur au volume du compartiment collecteur.

7. Dispositif selon la revendication 2, caractérisé en ce que l'électronique de commande (28) est pourvue d'une mémoire dans laquelle est enregistrée au moins la durée de la dernière ouverture de l'agencement de soupapes, que cette durée est évaluée et que l'intervalle de temps imposé est ajusté en conséquence.

8. Utilisation d'un évacuateur de condensat pour des systèmes de gaz comprimé, par exemple des systèmes d'air comprimé, avec un boîtier qui est pourvu d'un compartiment collecteur (40) pour du condensat pouvant être branché au système de gaz comprimé et ayant un volume de compartiment collecteur, et d'un canal de sortie, avec un agencement de soupapes (32, 34) attribué à ce canal de sortie et composé d'une soupape à membrane et d'un robinet électromagnétique commandant cette dernière et avec un circuit pilote électronique pourvu d'au moins un capteur (26) qui s'étend dans le compartiment collecteur et qui enregistre le condensat qui s'y trouve accumulé en indiquant les états "pas de condensat" et "condensat détecté", pour un agencement destiné à évacuer du condensat d'un système de gaz comprimé pourvu d'une chambre collectrice (20) pour du condensat, dans laquelle le condensât peut s'accumuler pendant le fonctionnement, cette chambre collectrice ayant une sortie (22) par laquelle le condensat accumulé peut être prélevé et un volume de chambre collectrice considérablement plus grand, plus particulièrement au moins dix fois plus grand que le volume du compartiment collecteur, le circuit pilote électronique étant pourvu d'un temporisateur (30) qui est mis en marche quand le signal du capteur passe de l'état "pas de condensat" à l'état "condensat détecté" et l'agencement de soupapes passant à l'état de passage une fois que le temps imposé par ledit temporisateur (30) est écoulé et l'agencement de soupapes passant de nouveau à l'état de verrouillage quand le signal sur le capteur (26) passe de l'indication "condensat détecté" à l'indication "pas de condensat".
